# EUROPEAN PATENT SPECIFICATION

(11) **EP 0 979 611 B1**
(45) Date of publication and mention of the grant of the patent: **26.10.2005**
(21) Application number: 99306073.0
(22) Date of filing: 30.07.1999
(51) Int. Cl.: A23G 3/00

(54) **Total gelatine replacement in chewy candy and/or fruit chews**
Ersatz von Gelatin für Kaubonbons und Kaufrüchten
Remplacement de la gélatine pour bonbons et fruits à mastiquer

(30) Priority: 06.08.1998 GB 9817021
(43) Date of publication of application: 16.02.2000
(73) Proprietor: CERESTAR HOLDING B.V., 4551 LA Sas Van Gent (NL)
(72) Inventor: van der Schueren, Freddy Maurits Luc, 9300 Aalst (BE)
(74) Representative: Wilkinson, Stephen John

(56) References cited:
- EP-A- 0 340 035
- WO-A-98/15189
- GB-A- 2 152 351
- US-A- 3 769 029
- US-A- 4 097 616
- US-A- 4 601 907
- US-A- 5 476 678
- US-A- 5 482 722
- US-A- 5 527 554

## Description

The present invention relates to gelatine replacement in chewy candies and fruit chews. The gelatine is replaced by a combination of a maltodextrin and wheat gluten.

### Background of the invention

The basis of a chewy candy is a sugar/glucose syrup combination and a gelatinizing agent, whereby during the processing no Maillard reaction is occurring. Examples of gelatinizing agents are gelatine, gum arabic, maltodextrin or a modified starch. A certain amount of fat is included to improve texture and prevent excessive stickiness in the mouth. The mixture after blending is pulled and aerated, which process results in a slightly elastic product having a short texture.
The chews have a lasting effect in the mouth, somewhat like chewing gum but without the presence of the insoluble gum base. The chewy candy can have a non-grained or grained texture, the latter can be obtained by sucrose recrystallization during pulling or by addition of fondant. To obtain an excellent lasting effect of the end product generally gelatine is used in the formulation. Chewiness is dictated by gelatine level. The other mentioned gelatinizing agents do not give rise to the desired elastic properties after pulling of the mass.

Gelatine is obtained by hydrolysis of collagen. Collagen is the major intercellular protein found in the connective tissue of animal skins and bones. Gelatine is generally used for its gel forming ability. A firm gel is formed in aqueous medium. Gelatine is mainly used in foods, pharmaceutical preparations or photographic products. It is also widely used as a colloid, it is particularly effective as an emulsifier and stabilizer of emulsions and foams such as water crystals in ice cream, air in marshmallows and oils in water.

Gelatine has found wide application, and it is used in many different products. The product has a very heterogeneous composition and this may influence the characteristics.

The gelatine used for application in chewy candies and chews is generally a low bloom type (120-130 bloom) used at low dosage level (0.5 to 2%).

GB 2 152 351 relates to a process for the manufacture of toffee. Toffee is a traditional confectionery based on emulsions of fat in aqueous systems comprising sucrose, glucose, water, milk protein, without gelatinizing agent, such as gelatine. Occurrence of Maillard reaction is an essential part during the preparation of toffees. Its major ingredients are sugars of both dairy and non-dairy origin. The sugars of dairy origin are normally lactose introduced in the form of condensed skimmed milk. The condensed skimmed milk contains lactose but the sweetening power of lactose is relatively low and in order to improve the sweetness of the condensed milk, sucrose is added. In order to increase the sweetness, hydrolysed whey syrup is applied. In hydrolysed whey syrup a major proportion of the original lactose is hydrolysed to glucose and galactose which have considerably more sweetening power than lactose. Accordingly, the invention provides a method for the production of toffee in which at least a part of the carbohydrate is supplied in the form of hydrolysed whey syrup and at least a further part is supplied in the form of a maltodextrin.

US 5,476,678 relates to a composition for and method of producing fibre-enhanced confection or snack. It relates to a composition for a method of producing a chewy fructose-based confection fortified with supplemental dietary fibre, which can be stabilised to produce a long textured taffy or a short textured nougat confection (aerated confection). The invention also relates to a method of making a nougat-textured candy without introducing a traditional protein-containing frappe. Aeration is achieved by using a blend of pre-gelatinised starches, mono- and di-glycerides and polyglycerol esters of fatty acids. The invention for producing supplemental dietary fibre-containing confections uses a high-grade spray dried fine particle size gum arabic powder. The further addition of very fine particle size guar gum and apple pectin adds soluble fibre, without impacting texture or sensory qualities.

US 4,292,337 relates to a chewy sugar-free confectionery material based on sorbitol and a sugar-free swelling agent and a method for the production thereof. The swelling agent may be mixtures of complex polysaccharides such as carrageenate, pectins, agar, alginates, carob bean flour, tragacanth, methyl cellulose, carboxymethyl cellulose, gelatine, gum arabic and/or low sugar maltodextrin.

US 4,759,940 relates to a method of producing bars (solid tablets) composed of milk and simple and complex sugars. From a nutritional standpoint, the value of milk is well recognised and it is the object of the invention to provide a method of producing bars made of milk and simple and complex sugars of various nature and in varying proportions to one another. The final product is an energetic product, which can meet the nutritional requirements of a broad range of potential consumers in need of a proteic and energetic contribution when confronted with particular bodily or physiological situations. The bars to be obtained may also have an important dietetic function through an appropriate selection of sugars having a low caloric contribution level and/or a decay-fighting function.

US 4,601 907 relates to a chewy confection item having a chewing consistency similar to that of chewing gum and providing a novel chewing texture, an effect of improved perception of the size of the item in the mouth, and a prolonged release of flavour or sweetness on chewing. The centre filling should have approximately the same chewy consistency as the outer chewing casing, so that at least on first bite through the confection, the consumer does not perceive an abrupt change of hardness or softness at the interface between casing and the filling. The aeration of the centre filling assists in imparting to the centre filling a chewy consistency approximating that of the outer chewing gum casing. The whipping agent serves to assist in the aerating of the centre filling, and assists in maintaining the aerated condition of the product during subsequent processing steps in storage. Examples of suitable whipping agents include egg albumin, gelatine, cereal protein isolate, agar, pectin, and mixtures thereof.

Already since a long time one is searching for gelatine replacers. Preferably, such a replacer is to be made from easily obtainable vegetable material having a homogeneous composition and having all the essential characteristics of gelatine. The interest in this search has lately increased since the outbreak of the BSE disease. Bovine skin and bones form a major source of collagen used for gelatine production.
The present invention discloses a product composition, which can suitably be used for replacing the gelatine. The product is of vegetable origin and use of the product gives rise to chewy candies and chews having the desired organoleptic properties.

### Summary of the invention

The present invention discloses chewy candies and fruit chews comprising a maltodextrin and wheat gluten. Wheat gluten is defined as vital wheat gluten, fractions of vital wheat gluten, modified wheat gluten, (partially) hydrolysed wheat gluten and/or mixtures thereof. The maltodextrin has a DE between 0.1 and 20, preferably between 4 to 10, more preferably DE of 5. The product does not contain gelatine and the gelatine is replaced with a combination of maltodextrin and vegetable protein, which is represented by wheat gluten.

The present invention also discloses a method for the preparation of chewy candies or fruit chews comprising the steps of:
- a) disperse wheat gluten in warm water and keep the solution warm,
- b) dissolve the sugar and maltodextrin in water, add glucose syrup, cook to the desired temperature, and cool the syrup,
- c) mix with other ingredients,
- d) cool the mass further,
- e) bring the cooled mass into desired form.

### Detailed description of the invention

The present invention describes chewy candies and fruit chews wherein the gelatine is replaced by a combination of a maltodextrin and wheat gluten, these components give body and elasticity, respectively. Wheat gluten is defined as vital wheat gluten, fractions of vital wheat gluten, modified wheat gluten, (partially) hydrolysed wheat gluten and/or mixtures thereof. Wheat gluten is used in combination with different maltodextrin types. The maltodextrins have a DE from 0.1 to 20 DE, preferably between 4 and 10 DE, more preferably a DE of 5, and are from any available starch source. Maltodextrins based on corn and potato have been favourably tested in a standard "chewy candy" formulation. In general wheat gluten is used to replace the gelatine. It is therefore added in an amount of between 0.5 and 10% (w/w), preferably between 0.5% and 5% (w/w). The maltodextrin is used in an amount of between 0.5 and 15% (w/w), preferably between 0.5 and 5% (w/w).

The obtained results indicate that the total amount of gelatine can for example be replaced by a combination of modified wheat gluten (C 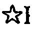 Pro® S211BO, available from Cerestar, and which is enzymatically hydrolysed wheat gluten) and a corn based 5 DE maltodextrin (C 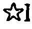 Dry® MD 01904, available from Cerestar). The obtained chewy candy has a similar long lasting (elasticity), similar texture profile and similar mouthfeel as the standard type with gelatine. The gelatine is replaced by an equal amount of modified wheat gluten while 3% of maltodextrin is added to the formulation, more generally, the gelatine is replaced by 0.5 to 10 % wheat gluten and 0.5 to 15 % maltodextrin.

The preparation method when using the combination of maltodextrin and wheat gluten, more preferably (partially) hydrolysed wheat gluten, is very similar to the standard type. As for gelatine the wheat gluten is dispersed into 50% of the total amount of water at 60°C and added to the sucrose/glucose mix. The maltodextrin is cooked-up with the sucrose/glucose mix, in order to dissolve the maltodextrin, followed by cooling the syrup. Fat, such as hydrogenated palm kern oil, and hydrogenated coconut oil chosen amongst other types of fat, is melted and emulsifiers such as lecithin and glycerol monostearate (GMS) can optionally be dispersed in melted fat, followed by addition to the cooled syrup. After cooling the wheat gluten dispersion is added.
The modified wheat gluten is easily incorporated into the mass during pulling, a similar pulling time gives a similar mass density which is comparable to the standard with gelatine.
Addition of emulsifiers can be avoided, when non-refined wheat starch-based maltodextrin is used as the maltodextrin contains lyso-lecithin, or when good dispersing facilities are available. Glycerol monostearate (GMS) can be added to improve dispersion of lecithin.
Different end textures of the chew can be obtained by changing the wheat gluten and/or maltodextrin level. The obtained chewy candy has a long lasting (elasticity), good texture profile and good mouthfeel.

### Example 1

The chewy candies were prepared as follows:
1. Standard formulation :
   - Dissolve the gelatine in warm water (70-80°C) and keep the solution warm at 60°C.
   - Dissolve the sugar in water, add glucose syrup and cook to the desired temperature, cool the syrup in a planetary mixing machine to 105°C.
   - Melt fat and disperse lecithin and glycerol monostearate (GMS) in the melted fat, and mix slowly in.
   - Add the warm gelatine solution and mix slowly in.
   - Pour onto cooling table, where it is "tempered" by folding to the desired body.
   - Add during the mixing process or on the cooling table, colour, flavour and acid.
   - The tempered, flavoured mass is pulled to the final texture required.
   - After further cooling, the mass is formed into pieces by pressing or extrusion and wrapped.
2. Formulation example for the present invention :
   - Disperse the modified wheat gluten in warm water at 60°C and keep the solution warm at 60°C.
   - Dissolve the sugar and maltodextrin in water, add glucose syrup and cook to the desired temperature, cool the syrup in a planetary mixing machine to 105°C.
   - Melt fat and disperse the lecithin and glycerol monostearate (GMS) in the melted fat and mix slowly in.
   - Add the warm modified wheat gluten solution and mix slowly in.
   - Pour onto cooling table, where it is "tempered" by folding to the desired body.
   - Add during the mixing process or on the cooling table, colour, flavour and acid.
   - The tempered, flavoured mass is pulled to the final texture required.
   - After further cooling, the mass is formed into pieces by pressing or extrusion and wrapped.

The following table shows the amounts and conditions used for making chewy candies on lab scale and on pilot scale.
Alternatively, when non-refined wheat starch-based maltodextrin is used the addition of lecithin can be avoided as the maltodextrin contains lyso-lecithin.

The products were obtained as described above and they showed the same elasticity and texture. It can be concluded that the mixture of wheat gluten (C 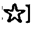 Pro) and maltodextrin (C 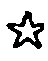 Pur) can be used for completely replacing gelatine.

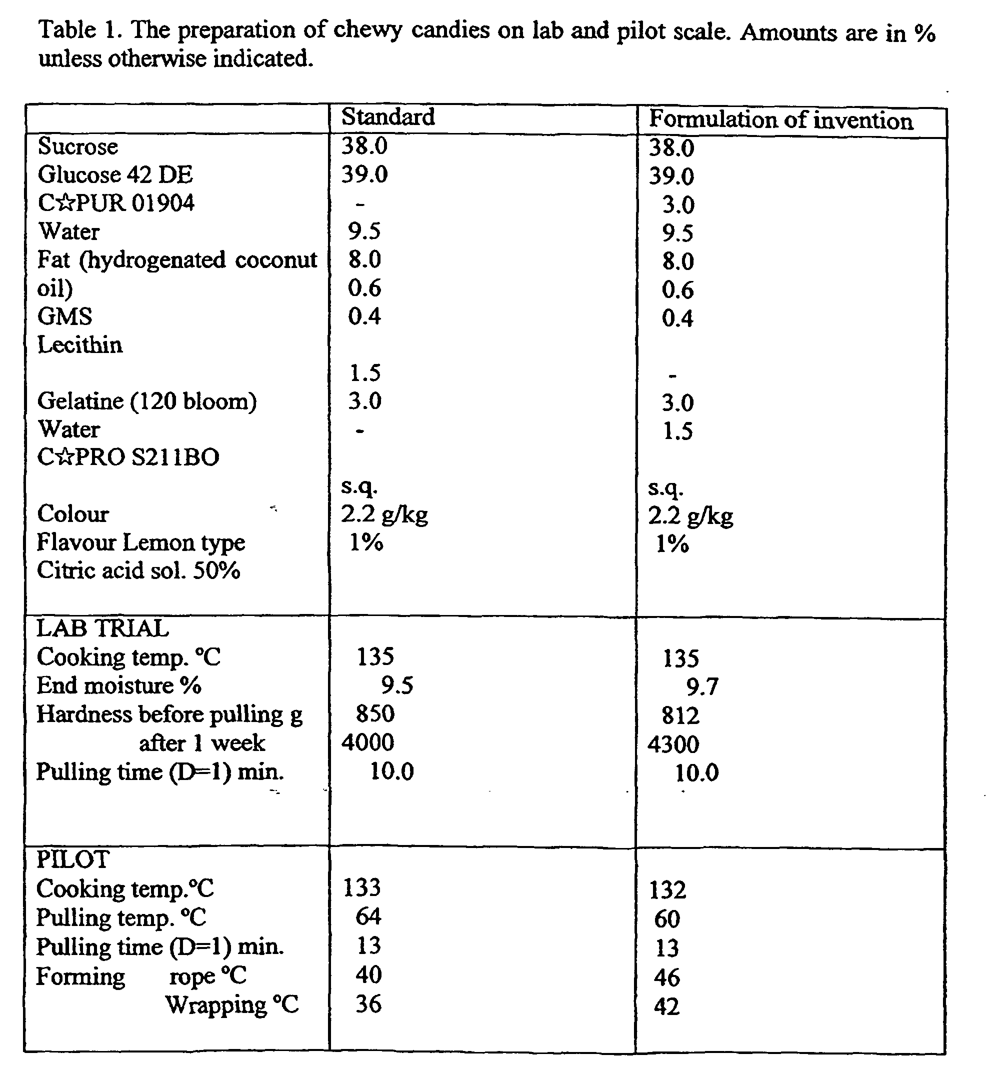

## Claims

1. A chewy candy or fruit chew comprising sucrose, a glucose syrup, wheat gluten, maltodextrin.

2. A chewy candy or fruit chew according to claim 1 wherein wheat gluten is vital wheat gluten, fractions of vital wheat gluten, modified wheat gluten, partially hydrolysed wheat gluten and/or mixtures thereof.

3. A chewy candy or fruit chew according to claim 1 wherein the maltodextrin has a DE of between 0.1 and 20, preferably a DE between 4 and 10, more preferably a DE of 5.

4. A chewy candy according to claim 1 wherein wheat gluten is present between 0.5 to 10% (w/w), preferably between 0.5 to 5% (w/w), and maltodextrin is present between 0.5 to 15% (w/w), preferably between 0.5 to 5% (w/w).

5. A process for preparing chewy candies or fruit chews comprising the steps:
- a) disperse wheat gluten in warm water and keep the solution warm,
- b) dissolve the sugar and maltodextrin in water, add glucose syrup, cook to the desired temperature, and cool the syrup,
- c) mix with other ingredients,
- d) cool the mass further,
- e) bring the cooled mass into desired form.

6. A process according to claim 5 **characterised in that** it consists of the following steps:
- a) disperse wheat gluten in warm water and keep the solution warm,
- b) dissolve the sugar and maltodextrin in water, add glucose syrup and cook to the desired temperature, cool the syrup,
- c) melt fat,
- d) optionally disperse emulsifiers in the melted fat,
- e) mix melted fat composition slowly with the product of step b),
- f) add the warm wheat gluten solution to the product of step e) and mix slowly,
- g) cool the mass, and temper,
- h) add during the mixing process or during cooling, colour, flavour and acid,
- i) pull the tempered, flavoured mass to the final texture,
- j) form the cooled mass into pieces by pressing or extrusion and wrap.

## Patentansprüche

1. Kaubonbon oder Kaufrucht, umfassend Saccharose, einen Glukosesirup, Weizengluten, Maltodextrin.

2. Kaubonbon oder Kaufrucht nach Anspruch 1, wobei Weizengluten vitales Weizengluten, Fraktionen von vitalem Weizengluten, modifiziertes Weizengluten, teilweise hydrolysiertes Weizengluten und/oder Gemische davon ist.

3. Kaubonbon oder Kaufrucht nach Anspruch 1, wobei das Maltodextrin einen DE-Wert zwischen 0,1 und 20, vorzugsweise einen DE-Wert zwischen 4 und 10, stärker bevorzugt einen DE-Wert von 5 aufweist.

4. Kaubonbon nach Anspruch 1, wobei das Weizengluten zwischen 0,5 und 10 Gew.-%, vorzugsweise zwischen 0,5 und 5 Gew.-% vorliegt, und Maltodextrin zwischen 0,5 und 15 Gew.-%, vorzugsweise zwischen 0,5 und 5 Gew.-% vorliegt.

5. Verfahren zur Herstellung von Kaubonbons oder Kaufrüchten, umfassend die Schritte:
- a) Dispergieren von Weizengluten in warmem Wasser und Warmhalten der Lösung,
- b) Auflösen des Zuckers und des Maltodextrins in Wasser, Zugeben von Glukosesirup, Kochen auf die gewünschte Temperatur und Abkühlen des Sirups,
- c) Mischen mit anderen Inhaltsstoffen,
- d) weiteres Abkühlen der Masse,
- e) Bringen der abgekühlten Masse in die gewünschte Form.

6. Verfahren nach Anspruch 5, **dadurch gekennzeichnet, daß** es aus den folgenden Schritten besteht:
- a) Dispergieren von Weizengluten in warmem Wasser und Warmhalten der Lösung,
- b) Auflösen des Zuckers und des Maltodextrins in Wasser, Zugeben von Glukosesirup und Kochen auf die gewünschte Temperatur, Abkühlen des Sirups,
- c) Schmelzen von Fett,
- d) gegebenenfalls Dispergieren von Emulgatoren in dem geschmolzenen Fett,
- e) langsames Mischen der geschmolzenen Fettzusammensetzung mit dem Produkt von Schritt b),
- f) Zugeben der warmen Weizenglutenlösung zu dem Produkt von Schritt e) und langsames Mischen,
- g) Abkühlen der Masse und Tempern,
- h) Zugeben während des Mischverfahrens oder während des Abkühlens von Farbstoff, Aromastoff und Säure,
- i) Ziehen der getemperten, aromatisierten Masse zu der Endtextur,
- j) Formen der abgekühlten Masse in Stücke durch Pressen oder Extrusion und Einwickeln.

## Revendications

1. Bonbon moelleux ou bonbon à mâcher aux fruits comprenant du sucrose, un sirop de glucose, du gluten de froment, de la maltodextrine.

2. Bonbon moelleux ou bonbon à mâcher aux fruits selon la revendication 1 dans lequel le gluten de froment est du gluten de froment élastique, des fractions de gluten de froment élastique, du gluten de froment modifié, du gluten de froment partiellement hydrolysé et/ou des mélanges de ceux-ci.

3. Bonbon moelleux ou bonbon à mâcher aux fruits selon la revendication 1 dans lequel la maltodextrine présente un DE compris entre 0,1 et 20, de préférence un DE entre 4 et 10, de manière plus préférée un DE de 5.

4. Bonbon moelleux ou bonbon à mâcher aux fruits selon la revendication 1 dans lequel le gluten de froment est présent entre 0,5 et 10 % (p/p), de préférence entre 0,5 et 5 % (p/p), et la maltodextrine est présente entre 0,5 et 15 % (p/p), de préférence entre 0,5 et 5 % (p/p).

5. Procédé pour la préparation de bonbons moelleux ou de bonbons à mâcher aux fruits comprenant les étapes de:
a) dispersion du gluten de froment dans de l'eau chaude et maintien de la solution chaude,
b) dissolution le sucre et la maltodextrine dans l'eau, ajout du sirop de glucose, cuisson à température désirée, et refroidissement du sirop,
c) mélange avec les autres ingrédients,
d) refroidissement de la masse encore,
e) production de la masse refroidie avec la forme désirée.

6. Procédé selon la revendication 5 **caractérisé en ce qu'**il comprend les étapes suivantes de :
a) dispersion du gluten de froment dans de l'eau chaude et maintien de la solution chaude,
b) dissolution du sucre et de la maltodextrine dans l'eau, ajout du sirop de glucose et cuisson à température désirée, refroidissement du sirop,
c) fusion de la graisse,
d) facultativement, dispersion des émulsifiants dans la graisse fondue,
e) mélange lent de la composition de graisse fondue avec le produit de l'étape b),
f) ajout de la solution de gluten de froment chaud au produit de l'étape e) et mélange lent,
g) refroidissement de la masse et tempérer,
h) ajout lors du procédé de mélange ou lors du refroidissement de la couleur, de l'arôme et de l'acide,
i) production de la masse tempérée, aromatisée avec sa texture finale,
j) formationn de morceaux avec la masse refroidie par pressage ou par extrusion et envelopper.
